# EUROPEAN PATENT SPECIFICATION

(11) **EP 2 900 798 B1**
(45) Date of publication and mention of the grant of the patent: **22.11.2017**
(21) Application number: 13770468.0
(22) Date of filing: 26.09.2013
(51) Int. Cl.: C10M 175/00

(54) **CONTINUOUS PURIFICATION OF MOTOR OILS**
KONTINUIERLICHE REINIGUNG VON MOTORENÖLEN
PURIFICATION CONTINUE DES HUILES DE MOTEUR

(30) Priority: 27.09.2012 EP 12186317
(43) Date of publication of application: 05.08.2015
(73) Proprietor: Alfa Laval Corporate AB, 221 00 Lund (SE)
(72) Inventor: WASE, Claes, S-146 37 Tullinge (SE)
(74) Representative: Alfa Laval Attorneys
(86) International application number: PCT/EP2013/070082
(87) International publication number: WO 2014/049060

(56) References cited:
- GB-A- 607 638
- GB-A- 836 993
- US-A1- 2010 144 508

## Description

### Technical field

The present invention relates to a method for continuous purifying contaminated motor lubricant oil, and a system for continuous separation of contaminant particles from motor lubricant oil.

### Background of the invention

Mineral oils, half- and full-synthetic, animal oils and vegetable oils, with or without additives, are used widely in industry for various purposes, such as lubrication, cooling and insulation. During such use the oils commonly become contaminated by different kinds of particles. Depending on the composition and the particular use different methods for purification of contaminated oils are used. Since long, contaminated oils have been filtered in filter beds containing clay, bleaching earth or kieselguhr.

The contaminants are usually in the shape of particles and may in many cases be very small in size and difficult to remove from the oil, examples of such particles are so called pentene insoluble particles such as soot etc. The amount of particles may also be small. The amount of separating aid that must be added may therefore be comparatively small, since there is no wish for separating aid in the motor. To separate two liquid phases of different density from each other in a centrifugal separator may cause problem if one of the phases is present only in a small amount. GB607638 discloses a continuous purification of an engine oil in a centrifugal separator integrated in an engine lubrication system.

US2010/144508 discloses a method for purifying a fluid or a lubricating oil composition in a centrifugal separation chamber by means of a separation aid.

### The Invention

Accordingly the present invention provides a solution to the above mentioned problem. The present invention relates to a method for continuous purifying contaminated motor lubricant oil from contaminant particles comprising:
- supplying contaminated lubricant oil together with a liquid separation aid from a motor lubricant oil system tank to a two phase separator, which two phase separator comprises a stack of separating discs and a conveyor screw, the motor lubricant oil system tank being connected to a motor for supplying lubricant oil to the motor;
- supplying the contaminated lubricant oil and the separation aid into a separation chamber of a rotating centrifugal rotor in the two phase separator;
- separating the contaminant particles together with the liquid separation aid from the oil and by centrifugal force in the separation chamber;
- continuously discharging a phase of contaminant particles and liquid separation aid from the separation chamber by the aid of the conveyor screw of the two phase separator;
- discharging purified oil from the separation chamber through a central light phase outlet back to the motor lubricant oil system tank; and
- continuously adding liquid separation aid to the oil before the inlet for the contaminated oil to the two-phase-separator; and
- continuously circulating lubricant oil from the motor lubricant oil system tank to the motor. Today about 4 % of the pentene insoluble particles are extracted form motor oils. With an extracting composition as a collecting phase in a purification system according to the invention as much as 97 - 99 % of the pentene insoluble particles can be extracted. Thus, the motor will be saved due to less abrasive particles in the cylinder lining. The filter consumption will decrease and the lifetime of the oils will drastically increase. The method comprises continuously circulating lubricant oil from the motor lubricant oil system tank to the motor. Thus, the lubricant oil in the tank may be continuously circulated to the separator in a separation loop, and may be continuously circulated from the tank to the motor in a motor loop. The circulation of the lubricant oil in the separation loop and the motor loop may be performed at the same time.

The method may also comprise mixing contaminated lubricant oil and liquid separation aid before supplying the the contaminated lubricant oil and the separation aid into the separation chamber of the two phase separator. The mixing may be carried out with the aid of at least one static mixer.

The method according to the invention may comprise that the motor lubricant oil system tank is connected to a motor, and the motor effect is at least 1 MW. The purification of the contaminated lubricant oil may be continuously carried out during the running of the motor. The motor may be a two stroke engine or a four stroke engine.

The method may further comprise addition of an additive that neutralizes acid contaminants within the oils. This may for example be performed by adding fresh oil that comprises such additive to the system, such as to the clean oil discharged from the separator. The additive that neutralizes acid contaminants within the oils may be a TBN (total base number) additive.

In the method according to the invention the temperature of the contaminated lubricant oil may be at least 70°C during the continuous purification, preferably the temperature is within the range from about 80 to 98 °C, more preferred the temperature is within the range from about 80 to 95 °C. The temperature of the contaminated lubricant oil may be dependent on the temperature of the motor, i.e. during the running of the motor heat is produced and thus the contaminated lubricant oil is heated to the temperature which is created by the motor. The liquid separation aid may have a density larger than that of the lubricant oil. Advantageously the liquid separation aid may contain additives which may give the oil the desired properties for the intended application, at which the density of the oils lie in the interval of 0,85 - 1,05 g/cm³ at 40 °C. One example of a suitable liquid polymer for purification of these kinds of oils is a polyhydroxy alkoxylate with a density of 1,0 - 1,1 g/cm³ at 40 °C.

The present invention relates also to a system for continuous separation of contaminant particles from motor lubricant oil. The system according to the invention comprises a two phase separator, a motor lubricant oil system tank and a motor. The two phase separator may comprise a stack of separating discs and a conveyor screw for discharging heavy phase particles and liquid separation aid. The two phase separator has an inlet for contaminated oil, and an outlet for light phase purified oil, and the two phase separator is connected to the motor lubricant oil system tank via the inlet and the outlet for light phase purified oil such that oil may be circulated between the tank and the separator. Parallel to the two phase separator a motor may be connected to the motor lubricant oil system tank such that lubricant oil may be circulated between the tank and the motor.

Thus, the motor lubricant oil system tank may be connected to the separator in a separation loop, such that lubricant oil may be pumped to the inlet of the separator and purified oil discharged from the outlet for light phase purified oil may be transferred back to the tank in a separation loop. Further, the motor lubricant oil system may be connected to the motor such that lubricant oil may be transferred to the motor from the tank and then back to the tank in a motor loop.

The system may be arranged such that lubricant oil may be withdrawn from a first position at the bottom of the lubricant oil tank to the separator and be returned from the separator to another, second position in the tank. The system may be further arranged such that oil is withdrawn to the motor close to the second position and returned from the motor close to the first position. Such a configuration may facilitate that the most contaminated oil in the tank is transferred to the separator and further that the oil being transferred to the motor is the cleanest oil in the tank.

The two phase separator may operate under force of at least 5000 G, preferably under a force within the range from about 5000 G to about 7000 G.

In the system the motor may have an effect of at least 1 MW. The motor may be a two stroke engine or a four stroke engine.

According to the invention a continuous addition of liquid separation aid takes place together with the oil. The liquid separation aid and the oil may, if so is considered suitable, be mixed in some kind of mixer connected to the inlet of the two phase separator or in a separate mixing operation prior to the purification. Therefore, one or more static mixers may be connected to the inlet of the two phase separator for mixing or blending the liquid separation aid with the contaminated oil. The additional inlet for dosage of liquid separation aid may be connected to the two phase separator before the static mixers.

The two phase separator operates as a clarificator with an extracting composition during operation of the motor sump, thus it is possible to receive above mentioned benefits. Accordingly the separator should operate as a "kidney" in the oil system.

The separation aid is dispersed in the contaminated oil in order to make the particles more easily separable from the oil. The contaminated oil and the liquid separation aid are supplied into a separation chamber of a rotating centrifugal rotor. The liquid separation aid and the particles are separated from the oil by centrifugal force. The purified oil is discharged from the separation chamber through a central light phase outlet. The separated particles and the liquid separation aid are discharged from the separation chamber through a heavy phase outlet and conveyed out by the conveyor screw.

The choice of the liquid separating aid depends on the oil, which is to be purified. The oils may be pure mineral oils, half- or full- synthetic oils, or animal or vegetable oils with or without additives giving the oils their desired properties.

The choice of separating aid is also dependent on the kind of contaminating particles, which are to be removed from the oil. On the market different combinations of separating aids are available. The liquid separation aid may or may not contain water or be soluble in water. The used separation aid should however be insoluble in oil. Depending on the amount of contaminated particles a larger or smaller amount of separating aid is added. The separating aid may contain substances causing flocculation of the particles, which gives heavier particles more easily removable by centrifugal separation. The separating aid may also attract or bind the particles by way of chemical or surface chemical bonds.

According to the invention wear resistant elements may be spaced apart along the edge of the conveyor flight on the conveyor screw. The wear resistant elements may be distributed at a distance from each other, leaving intermediate parts, i.e. interspaces. Less number of wear resistant elements will reduce both the weight and in particular the moment of inertia as well as the total production time and cost of the screw conveyor. The distance between the wear resistant elements may vary depending on the circumstances. However, spacing the wear resistant elements too far apart may give an inadequate wear protection to the conveyor flight. In this case, the wear protection may be improved by simply reducing the distance between the wear resistant elements. The spacing of the wear resistant elements can be determined with regard to different aspects, such as the operational conditions of the screw conveyor or the cost versus the durability of the screw conveyor.

### Brief description of the drawings

The invention will be further explained by a description of an embodiment in the following with reference to the accompanying drawings.
- Figure 1: shows one embodiment of the invention together.
- Figure 2: shows another embodiment of the invention.
- Figure 3: shows a sectional view of a centrifugal separator according to the invention.

### Detailed description of the drawings

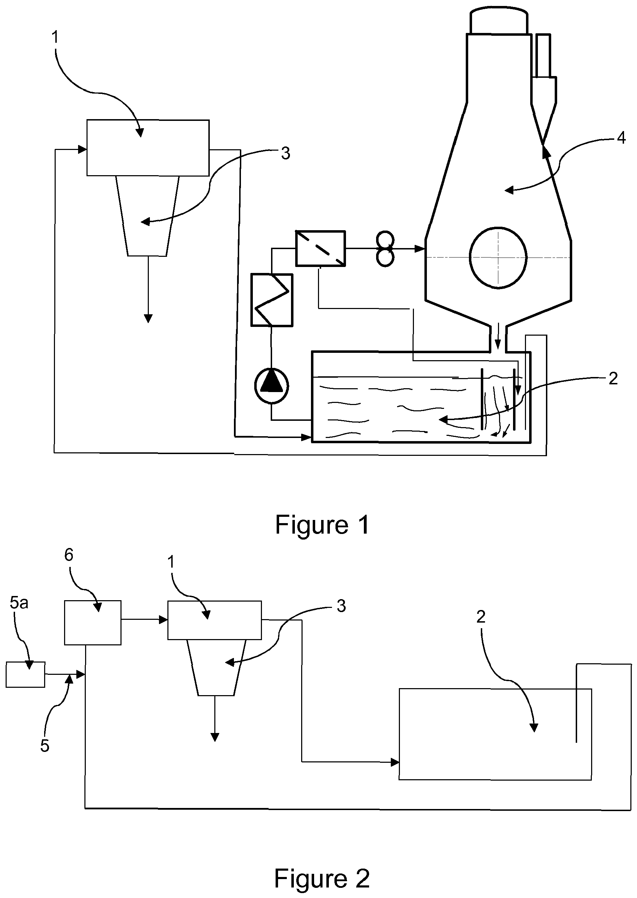

Figure 1 shows a continuous purification system according to the invention. A two phase separator 1 is connected to a motor lubricant oil system tank 2, and the two phase separator is continuously separating off the contaminant particles together with the liquid separation aid as a heavy phase. The heavy phase is continuously discharged or conveyed out via a conveyor screw 3 in the bottom of the separator. The light phase, i.e. the purified lubricant oil is transferred back to the motor lubricant oil system tank 2. A motor 4 is connected to motor lubricant oil system tank 2 and lubricant oil is continuously transferred from the motor lubricant oil system tank 2 back to the motor, and the two phase separator thus acts as a kidney in the system, and continuously separates the particles from the oil. Used contaminated oil is discharged into motor lubricant oil system tank 2 from where oil is pumped to the two phase separator 1 for purification. Since the purification process is continuously ongoing during the operation of the motor the temperature of the circulating oil is at least 70°C, preferably the temperature is within the range from about 80 to about 98 °C.

Figure 2 shows an embodiment of the invention. In this figure the motor 4 is not shown. According to this embodiment the liquid separation aid may suitably have a density larger than that of the lubricant oil, thus forming a heavy phase together with the contaminating particles. The liquid separation aid is dosed in an inlet 5 before the inlet to two phase separator 1. To the inlet 5 could a dosage pump 5a be connected according to one alternative, other suitable alternatives for dosage of separation aid is also possible. To blend the separation aid with the contaminated oil one or more static mixers 6 are placed before the inlet to two phase separator 1.

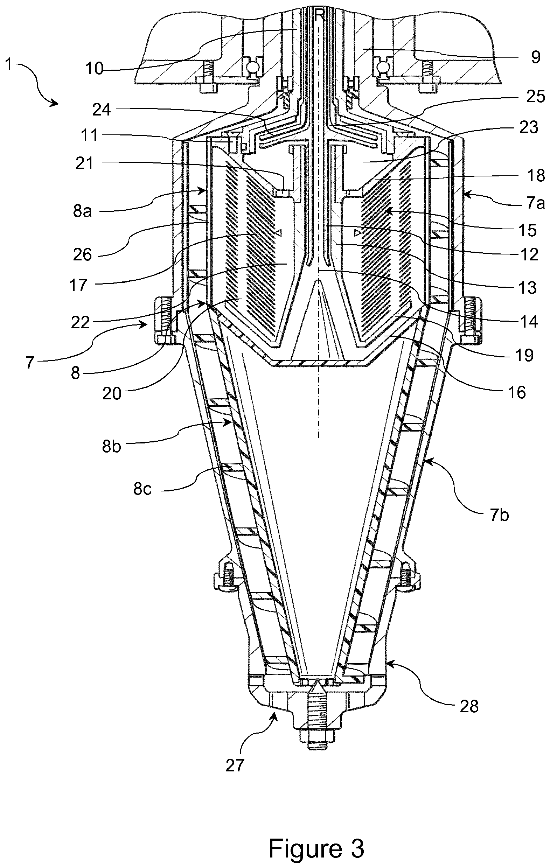

Figure 3 shows a two phase separator 1 according to an embodiment of the invention. Two phase separator 1 comprises a rotor 7 which is rotatable at a certain speed around a vertical axis of rotation R, and a screw conveyor 8 which is arranged in the rotor 7 and rotatable around the same axis of rotation R but at a speed which differs from the rotation speed of the rotor 7.

Two phase separator 1 is intended to be suspended vertically in a manner indicated by WO 99/65610 A1. The device necessary for suspending and driving two phase separator 1 is therefore not described here.

The rotor 7 has an essentially cylindrical upper rotor portion 7a, and an essentially conical lower rotor portion 7b, the rotor portions 7a and 7b being connected to one another by screws. Alternative connection members can of course be used. The cylindrical rotor portion 7a includes an extension axially upwards in the form of a hollow rotor shaft 9, which is connected to a drive device (not shown) for rotating the rotor 7 around the axis of rotation R.

A further hollow shaft 10 extends into the rotor 7 through the interior of the hollow rotor shaft 9. This hollow shaft 10 supports the screw conveyor 8 by means of screws 11, is drivingly connected to the screw conveyor, and is hereinafter called the conveyor shaft 10. The screw conveyor 8 comprises a cylindrical upper conveyor portion 8a which extends axially inside the cylindrical rotor portion 7a, a conical lower conveyor portion 8b which extends axially inside the conical lower rotor portion 7b, and a conveyor flight 8c which extends in a helical manner along the upper cylindrical portion 8a and the lower conical portion 8b of the screw conveyor 8. The screw conveyor 8 may of course have more than one conveyor flight 8c, e.g. two or three conveyer flights, which all extend in a helical manner along the inside of the rotor 7.

An inlet pipe 12 for a liquid mixture which is to treated in the rotor 7 extends through the conveyor shaft 10 and leads on into a central sleeve 13 in the interior of the screw conveyor 8. The central sleeve 13 delimits an inlet chamber 14 for the liquid mixture, wherein the inlet chamber 14 communicates with a separation chamber 15 via radially extending distribution channels 16.

The separation chamber 15 is an annular space that surrounds the inlet chamber 14 and comprises a stack of truncated conical separation discs 17. The stack is fitted radially inside the cylindrical portion 8a of the screw conveyor 8 and arranged coaxially with the axis of rotation R. The conical separation discs 17 are held together axially between an upper truncated conical support plate 18 and a lower truncated conical support plate 19. As can be seen, the lower support plate 19 is formed in one piece with the central sleeve 13. The separation discs 17 comprise holes which form channels 20 for axial flow and distribution of liquid through the stack of separation discs 17. The lower support plate 19 comprises a corresponding hole (not shown), whereby the distribution channels 16 communicate with the channels 20 for axial flow of liquid in the stack of separation discs 17. The upper support plate 18 comprises a number of holes 21 which connect a radially inner annular space 22, within the stack of separation discs 17, with a liquid outlet chamber 23. Such liquid may for example be oil. A so called paring disc 24 for discharging purified oil is disposed within the outlet chamber 23. The paring disc 24 is stationary and firmly connected to the inlet pipe 12, wherein the paring disc 24 is communicating with an outlet channel 25 extending in an outlet pipe which surrounds the inlet pipe 12.

The cylindrical portion 8a of the screw conveyor 8 radially surrounds the stack of separation discs 17, wherein the cylindrical portion 8a comprises a number of axially extending apertures 26 which are distributed round the axis of rotation R. The axially extending apertures 26 are provided to allow for the separated particles to pass through and deposit on the inside wall of the cylindrical portion 7a of the rotor 7. Liquid will of course also be able to pass through the apertures 26 in the cylindrical portion 8a of the screw conveyor 8.

The rotor 7 has at its lower end a solids outlet 27 for separated particles and separation aid (solids). In connection with this solids outlet 27, the rotor could be surrounded by a container (not shown) for intercepting and collecting the solids which leaves the solids outlet 27. The solids are transported by means of the conveyor flight 8c towards and out of the solids outlet 27. Accordingly, during operation, the screw conveyor 8 is arranged to rotate at a different speed than the rotor 7, whereby the solids are discharged by the conveyor flight 8c of the screw conveyor 8. This differential speed between the rotor 7 and the screw conveyor 8 may be constant or varied in a known manner; depending on for instance a desired dryness on the discharged solids and/or the amount of torque needed to drive the screw conveyor 8 for the discharge of the solids. If the solids are very difficult to discharge, the rotor 7 may even be operated in a cycle comprising a solids discharge phase of lower rotational speed than a separation phase. In this way, the solids are discharged more easily as the centrifugal forces inside the rotor 7 are reduced at the lower speed. A known way of operating the centrifugal separator in such a cycle is further described in WO 2011/053224 A1. Furthermore, after an interrupted (or paused) operation, the centrifugal separator may need to be cleared before a restart. Hence, there could be some remaining mixture of solids and liquid inside the stack of separation discs 17, which need to be cleared prior to resuming a separating operation. This may be achieved by bringing the screw conveyor 8 with the stack of separation discs 17 into rotation within a stationary (and empty) rotor 7. In this way, the remaining mixture will be thrown out of the stack and into the inside wall of the stationary rotor, whereon it's easily discharged out of the solids outlet 27 by means of gravity and the rotating screw conveyor 8.

The screw conveyor 8 is made in one piece of a polymer material, such as plastic or nylon, which could be fibre-reinforced. The conical portion 8b has a hollow interior or cavity, which is either sealed or open to the surrounding. If desired, the cavity could be filled with some material having a relatively low density, such as cellular plastic or the like. Furthermore, the lower conical portion 7b of the rotor 7 is arranged with a support device 28 for the screw conveyor.

Since the screw conveyor rotates at a different speed than the rotor, the wear resistant elements, not seen in the figures, may act as a kind of cutting inserts providing a tangential cutting force on the hard solid cake, i.e. the heavy phase of particles and liquid separation aid. This cutting effect will loosen up the hard abrasive cake; making it both easier to discharge and less harmful for the conveyor flight. In general the wear resistant elements could be made of any material which is harder than the conveyor flight. However, in high speed separation of liquid mixtures leaving a hard solid cake on the inside wall of the rotor, the wear resistant elements should be made of a material which is also harder than the hard solid cake. Such wear resistant elements can be made of any suitable wear resistant material, such as oxide or non-oxide ceramics, metals, diamond or any composite material or combination of them.

According to a further embodiment of the invention the screw conveyor may be made of a polymer. A polymeric material, such as plastic or nylon, is used because of its low density, high chemical stability and low production cost. However, the entire screw conveyor with the conveyor flight may be moulded in one integral piece of polymeric material, wherein the wear resistant elements may be spaced apart and attached to the conveyor flight for adequate wear protection.

The surface of the screw conveyor may also comprise a wear resistant coating. Such a coating may be achieved through several kinds of coating methods. One such method is for example slurry spray coating using organic binders and wear resistant particles. The binders may include natural and synthetic resins, such as acrylics, polyesters, melamine resins and epoxies. The wear resistant particles can be of different oxides, carbides, nitrides and diamond, which all have different hardness and provide different wear resistance. The slurry spray coating can easily be performed by any commercial available spray machine.

## Claims

1. A method for continuous purifying contaminated motor lubricant oil from contaminant particles comprising:
- supplying contaminated lubricant oil from a motor lubricant oil system tank together with liquid separation aid to a two phase separator, which two phase separator comprises a stack of separating discs and a conveyor screw, said motor lubricant oil system tank being connected to a motor for supplying lubricant oil to said motor;
- continuously adding said liquid separation aid to the oil before the inlet for the contaminated oil to the two-phase separator;
- supplying said contaminated lubricant oil and the separation aid into a separation chamber of a rotating centrifugal rotor in said two phase separator;
- separating the contaminant particles together with the liquid separation aid from the oil and by centrifugal force in said separation chamber;
- continuously discharging a phase of contaminant particles and liquid separation aid from the separation chamber by the aid of said conveyor screw of the two phase separator;
- discharging purified oil from the separation chamber through a central light phase outlet back to the motor lubricant oil system tank; and
and wherein the method further comprises
- continuously circulating lubricant oil from the motor lubricant oil system
tank to the motor.

2. The method according to claim 1, wherein the method also comprises mixing the contaminated lubricant oil and the liquid separation aid before supplying said contaminated lubricant oil and the separation aid into the separation chamber of the two phase separator.

3. The method according to claim 2, wherein the mixing is carried out with the aid of at least one static mixer.

4. The method according to any one of the preceding claims, wherein the motor lubricant oil system tank is connected to a motor, and the motor effect is at least 1 MW, and the purification of the contaminated lubricant oil is continuously carried out during the running of the motor.

5. The method according to any one of the preceding claims, wherein said motor is a two stroke engine or a four stroke engine.

6. The method according to any one of the preceding claims, wherein the temperature of the contaminated lubricant oil is at least 70°C during the continuous purification, preferably the temperature is within the range from about 80 to 98 °C.

7. The method according to any one of the preceding claims, wherein the liquid separation aid has a density larger than that of the lubricant oil.

8. A system for continuous separation of contaminant particles from motor lubricant oil comprising a two phase separator, a motor lubricant oil system tank and a motor, wherein the two phase separator comprises a stack of separating discs and a conveyor screw for discharging heavy phase particles and liquid separation aid, and the two phase separator has an inlet for contaminated oil, and an outlet for light phase purified oil, wherein the two phase separator is connected to the motor lubricant oil system tank via the inlet and the outlet for light phase purified oil such that oil may be circulated between the tank and the separator and wherein also the motor is connected to the motor lubricant oil system tank such that lubricant oil may be circulated between the tank and the motor, a dosage pump (5a) adapted to continuously dose said liquid separation aid in an inlet (5) before the inlet for the contaminated oil to the two-phase separator.

9. The system according to claim 8, wherein the two phase separator operates under force of at least 5000G, preferably under a force within the range from about 5000G to about 7000 G.

10. The system according to claim 8 or 9, wherein the motor has an effect of at least 1 MW.

11. The system according to any one of claims 8 to 10, wherein one or more static mixers are connected to the inlet of the two phase separator.

12. The system according to any one of claims 8 to 11, wherein an additional inlet for dosage of liquid separation aid is connected to the two phase separator before the static mixers.

13. The system according to any one of claims 8 to 12, wherein wear resistant elements are spaced apart along the edge of the conveyor flight on the conveyor screw.

## Patentansprüche

1. Verfahren zum kontinuierlichen Reinigen von kontaminierten Motorschmierölen von Verunreinigungspartikeln, umfassend:
- Zuführen eines kontaminierten Schmieröls von einem Motorschmierölsystemtank zusammen mit einem Flüssigkeitstrennmittel zu einem zweiphasigen Separator, welcher einen Stapel von Trennscheiben und eine Förderschraube umfasst, wobei der Motorschmierölsystemtank mit einem Motor verbunden ist, um Schmieröl zu diesem Motor zuzuführen;
- Kontinuierliches Zugeben des Flüssigkeitstrennmittels zu dem Öl, vor dem Eingang des verunreinigten Öls in dem zweiphasigen Separator;
- Zuführen des kontaminierten Schmieröls und des Trennmittels in eine Trennkammer eines rotierenden Zentrifugalrotors im zweiphasigen Separator;
- Trennen der Verunreinigungspartikel zusammen mit dem Flüssigkeitstrennmittel vom Öl und durch Zentrifugalkraft in der Trennkammer;
- Kontinuierliche Ausscheidung einer Phase der Verunreinigungspartikel und des Flüssigkeitstrennmittels von der Trennkammer mittels der Förderschraube des zweiphasigen Separators;
- Auslassen des gereinigten Öls von der Trennkammer durch einen zentralen Leichtphasenausgang und Rückführen in den Motorschmierölsystemtank; und
wobei das Verfahren ferner umfasst
- Kontinuierliches Zirkulieren des Schmieröls vom Motorschmierölsystemtank zum Motor.

2. Verfahren nach Anspruch 1, wobei das Verfahren auch das Mischen des kontaminierten Schmieröls und des Flüssigkeitstrennmittels vor dem Zuführen des kontaminierten Schmieröls und des Trennmittels in die Trennkammer des zweiphasigen Separators umfasst.

3. Verfahren nach Anspruch 2, wobei das Mischen mit Hilfe zumindest eines statischen Mischers ausgeführt wird.

4. Verfahren nach einem der vorhergehenden Ansprüche, wobei der Motorschmierölsystemtank mit einem Motor verbunden ist, und die Motorleistung zumindest 1 MW beträgt, und die Reinigung des kontaminierten Schmieröls kontinuierlich während des Betriebs des Motors ausgeführt wird.

5. Verfahren nach einem der vorhergehenden Ansprüche, wobei der Motor ein Zweitaktmotor oder ein Viertaktmotor ist.

6. Verfahren nach einem der vorhergehenden Ansprüche, wobei die Temperatur des kontaminierten Schmieröls während der kontinuierlichen Reinigung zumindest 70 °C beträgt, wobei die Temperatur bevorzugt im Bereich von etwa 80 bis 98 °C liegt.

7. Verfahren nach einem der vorhergehenden Ansprüche, wobei das Flüssigkeitstrennmittel eine Dichte aufweist, welche größer als die des Schmieröls ist.

8. System zur kontinuierlichen Abscheidung von Verunreinigungspartikeln aus einem Motorschmieröl, umfassend einen zweiphasigen Separator, einen Motorschmierölsystemtank und einen Motor, wobei der zweiphasige Separator einen Stapel von Trennscheiben und eine Förderschraube umfasst, um Partikel in der schweren Phase und Flüssigkeitstrennmittel abzuscheiden, und wobei der zweiphasige Separator einen Eingang für kontaminiertes Öl und einen Ausgang für das gereinigte Öl in der leichten Phase aufweist, wobei der zweiphasige Separator mit dem Motorschmierölsystemtank über den Eingang und den Ausgang für die leichte Phase des gereinigten Öls verbunden ist, sodass Öl zwischen dem Tank und dem Separator zirkulieren kann und wobei auch der Motor mit dem Motorschmierölsystemtank verbunden ist, sodass Schmieröl zwischen dem Tank und dem Motor zirkulieren kann, wobei eine Dosierpumpe (5a) zum kontinuierlichen Dosieren des Flüssigkeitstrennmittels in einen Eingang (5) ausgebildet ist, vor dem Eintritt des kontaminierten Öls in den zweiphasigen Separator.

9. System nach Anspruch 8, wobei der zweiphasige Separator mit einer Kraft von zumindest 5000 G arbeitet, bevorzugt mit einer Kraft im Bereich zwischen etwa 5000 G und etwa 7000 G.

10. System nach Anspruch 8 oder 9, wobei der Motor eine Leistung von zumindest 1 MW aufweist.

11. System nach einem der Ansprüche 8 bis 10, wobei ein oder mehrere statische Mischer mit dem Eingang des zweiphasigen Separators verbunden sind.

12. System nach einem der Ansprüche 8 bis 11, wobei ein zusätzlicher Eingang zum Dosieren des Flüssigkeitstrennmittels mit dem zweiphasigen Separator vor den statischen Mischern verbunden ist.

13. System nach einem der Ansprüche 8 bis 12, wobei verschleißfeste Elemente entlang der Kante des Förderstegs der Förderschraube voneinander beabstandet angeordnet sind.

## Revendications

1. Procédé de purification continue d'huile de lubrification de moteur contaminée de particules contaminantes, comprenant les étapes ci-dessous :
- alimentation d'huile de lubrification contaminée à partir d'un réservoir de système d'huile de lubrification de moteur ensemble avec un adjuvant de séparation liquide dans un séparateur à deux phases, ce séparateur à deux phases comprenant une pile de disques de séparation et une vis de transport, ledit réservoir du système d'huile de lubrification du moteur étant connecté à un moteur pour amener de l'huile de lubrification vers ledit moteur ;
- addition continue dudit adjuvant de séparation liquide à l'huile devant l'entrée de l'huile contaminée dans le séparateur à deux phases ;
amenée de ladite huile de lubrification contaminée et de l'adjuvant de séparation dans une chambre de séparation d'un rotor centrifuge rotatif dans ledit séparateur à deux phases ;
séparation des particules contaminantes ensemble avec l'adjuvant de séparation liquide de l'huile, par une force centrifuge dans ladite chambre de séparation ;
décharge continue d'une phase de particules contaminantes et de l'adjuvant de séparation liquide de la chambre de séparation par l'intermédiaire de ladite vis de transport du séparateur à deux phases ;
décharge de l'huile purifiée de la chambre de séparation à travers une sortie centrale de phase légère vers le réservoir du système d'huile de lubrification du moteur ; et
dans lequel le procédé comprend en outre l'étape ci-dessous :
circulation continue d'huile de lubrification du système d'huile de lubrification du moteur vers le moteur.

2. Procédé selon la revendication 1, dans lequel le procédé comprend en outre l'étape de mélange de l'huile de lubrification contaminée et de l'adjuvant de séparation liquide avant l'amenée de ladite huile de lubrification contaminée et de l'adjuvant de séparation dans la chambre de séparation du séparateur à deux phases.

3. Procédé selon la revendication 2, dans lequel le mélange est effectué par l'intermédiaire d'au moins un mélangeur statique.

4. Procédé selon l'une quelconque des revendications précédentes, dans lequel le réservoir du système d'huile de lubrification du moteur est connecté à un moteur, l'effet du moteur correspondant au moins à 1 MW, la purification de l'huile de lubrification contaminée étant effectuée en continu au cours du fonctionnement du moteur.

5. Procédé selon l'une quelconque des revendications précédentes, dans lequel ledit moteur est un moteur à deux temps ou un moteur à quatre temps.

6. Procédé selon l'une quelconque des revendications précédentes, dans lequel la température de l'huile de lubrification contaminée correspond au moins à 70°C au cours de la purification continue, la température étant de préférence comprise dans l'intervalle allant d'environ 80 à 98°C.

7. Procédé selon l'une quelconque des revendications précédentes, dans lequel l'adjuvant de séparation liquide a une densité supérieure à celle de l'huile de lubrification.

8. Système de séparation continue de particules contaminantes de l'huile de lubrification du moteur, comprenant un séparateur à deux phases, un réservoir de système d'huile de lubrification du moteur et un moteur, dans lequel le séparateur à deux phases comprend une pile de disques de séparation et une vis de transport pour décharger des particules de phase lourde et l'adjuvant de séparation liquide, le séparateur à deux phases comportant une entrée pour l'huile contaminée, et une sortie pour l'huile purifiée de phase légère, dans lequel le séparateur à deux phases est connecté au réservoir du système d'huile de lubrification du moteur à travers l'entrée et la sortie pour l'huile purifiée de phase légère, de sorte que l'huile peut circuler entre le réservoir et le séparateur, et dans lequel le moteur est en outre connecté au système d'huile de lubrification du moteur, l'huile de lubrification pouvant ainsi circuler entre le réservoir et le séparateur et le moteur étant en outre connecté au réservoir du système d'huile de lubrification du moteur, de sorte que l'huile de lubrification peut circuler entre le réservoir et le moteur, une pompe de dosage (5a) adaptée pour un dosage continu dudit adjuvant de séparation liquide dans une entrée (5) avant l'introduction de l'huile contaminée dans le séparateur à deux phases.

9. Système selon la revendication 8, dans lequel le séparateur à deux phases fonctionne en présence d'une force d'au moins 5000 G, de préférence en présence d'une force comprise dans un intervalle compris entre environ 5000 G et environ 7000 G.

10. Système selon les revendications 8 ou 9, dans lequel le moteur a un effet d'au moins 1 MW.

11. Système selon l'une quelconque des revendications 8 à 10, dans lequel un ou plusieurs mélangeurs statiques sont connectés à l'entrée du séparateur à deux phases.

12. Système selon l'une quelconque des revendications 8 à 11, dans lequel une entrée additionnelle pour le dosage de l'adjuvant de séparation liquide est connectée au séparateur à deux phases avant les mélangeurs statiques.

13. Système selon l'une quelconque des revendications 8 à 12, dans lequel des éléments résistants à l'usure sont espacés le long du bord du filet de transport sur la vis de transport.
